# EUROPEAN PATENT SPECIFICATION

(11) **EP 3 904 780 B1**
(45) Date of publication and mention of the grant of the patent: **03.08.2022**
(21) Application number: 21000100.4
(22) Date of filing: 09.04.2021
(51) Int. Cl.: F24H 1/18, F24H 1/20, F24H 9/00, F28D 20/00, F24H 9/45, F28F 19/00

(54) **FLAT-TYPE WATER HEATER WITH TANKS CONNECTED IN PARALLEL**
FLACHER WASSERERHITZER MIT PARALLEL GESCHALTETEN TANKS
CHAUFFE-EAU DE TYPE PLAT COMPORTANT DES RÉSERVOIRS CONNECTÉS EN PARALLÈLE

(30) Priority: 29.04.2020 IT 202000009331
(43) Date of publication of application: 03.11.2021
(73) Proprietor: ARISTON S.P.A., 60044 Fabriano (AN) (IT)
(72) Inventor: Ferroni, Stefano, I - 60044 Fabriano (AN) (IT); Cellottini, Marcello, I - 60044 Fabriano (AN) (IT); Morbidelli, Matteo, I - 60044 Fabriano (AN) (IT); Ramadoro, Livio, I - 60044 Fabriano (AN) (IT)
(74) Representative: Premru, Rok

(56) References cited:
- WO-A1-2011/104592
- DE-A1- 2 548 048
- DE-A1- 3 011 426
- ES-U- 1 236 754
- FR-A1- 2 244 970

## Description

The present invention relates to an electric storage water heater comprising at least two tanks of reduced thickness, connected in parallel to each other by direct coupling means, reciprocally made on the shells adjacent to such tanks.

The invention, therefore, falls within the sector of storage water heaters of the so called "Flat" type, wherein the two or more tanks have a reduced diameter compared to that of a standard water heater of equivalent volume.

For a more exhaustive description of the features and advantages of such kind of Flat water heater according to the preamble of claim1, reference shall be made to the prior documents No. EP2529159 and ES1236754 owned by the same applicant of the present patent application, which shows a water heater comprising two tanks contained within the same casing and connected in series by a by-pass tube made on the lower caps of said tanks, adapted to transfer the water from the dome of the upstream tank towards the bottom of the downstream tank, which finally sends it hot to the user by drawing it from the dome.

The prior document DE2548011 shows, instead, a water heater with two tanks connected in parallel, i.e. wherein the storage water fills such tanks in parallel by special by-pass ducts connecting the adjacent shells of said tanks.

In the aforementioned patent DE2548011 the two tanks are connected to each other by two by-pass ducts, one positioned in the lower zone of the shells and the other in the upper zone: such configuration essentially has advantages connected to the speed in making a certain quantity of hot water available to the user and economic savings due to the reduction of the components necessary for the operation of the water heater, the presence of an electric resistance being able to be provided in the tank upstream alone, the heating power whereof has an effect also on the mass of water flowing into the adjacent tank downstream through the lower by-pass duct.

Conversely, the solution shown in the prior document DE2548011, and similarly provided in the current Flat water heaters with two or more tanks connected in parallel, necessarily requires by-pass ducts for the connection and mutual communication among such tanks, which involves the need for additional components and processing.

In fact, said by-pass ducts typically comprise straight tube trunks, communicating with special openings made on the adjacent shells of the tanks to be connected in parallel: both ends of such tube trunks must therefore be constrained to the aforementioned openings, generally by circumferential welding.

In order to avoid the increase in the overall width dimensions of the entire Flat water heater, it is necessary that the tube trunks be of reduced length in order to minimize the distance among the storage tanks: however such dimensional requirement, which is the foundation of the Flat water heater type, is unlikely to coexist with the spaces required for circumferential welding operations, which require a minimum distance among such tanks in the order of a few cm. Therefore, there is an actual impossibility of keeping the dimensions of a Flat water heater with tanks connected in parallel within the current standard overall dimensions of a Flat water heater with tanks connected in series, such as for example those of the product described in patent EP2529159 in which the gap between the two tanks is only 8 mm.

The use of by-pass ducts as described above, which substantially represent a consolidated standard in the sector of Flat water heaters with parallel connection, determines another order of drawbacks, connected to the difficulty of protecting their walls (and the welding zones with the openings of the tanks) from corrosive effects, by the electrostatic powder enamelling process commonly used for the entire tank: in fact, due to the well-known "Faraday cage" and "back-ionization" effects, the electrostatic powder particles cannot to be applied uniformly by spray on such circumferential welding zones and inside said by-pass ducts, making their enamelling with the so-called "wet enamelling" technique mandatory.

The object of the present invention is to obviate such kind of drawbacks, by providing a Flat water heater provided with two or more tanks connected in parallel without the use of by-pass ducts as known so far in the sector.

Another object of the present invention is to indicate a Flat water heater with two or more tanks connected in parallel which has overall dimensions entirely comparable to those of a similar Flat water heater with two or more tanks connected in series, so as to avoid excessive changes in the production process and so as to allow a retrofitting replacement installation between the two models of Flat water heaters.

A further object of the present invention is to indicate a Flat water heater with two or more tanks connected in parallel which is capable of being installed both in vertical and horizontal mode, without substantial deficits in energy performance in terms of quantity of hot water supplied to the user at usage temperature.

These and other objects, which shall appear clear hereinafter, are achieved with a Flat water heater with two or more tanks connected in parallel according to claim 1. Other objects may also be achieved by means of the additional features of the dependent claims.

Further features of the present invention shall be better highlighted by the following description of a preferred embodiment, in accordance with the patent claims and illustrated, purely by way of a non-limiting example, in the annexed drawing tables, wherein:

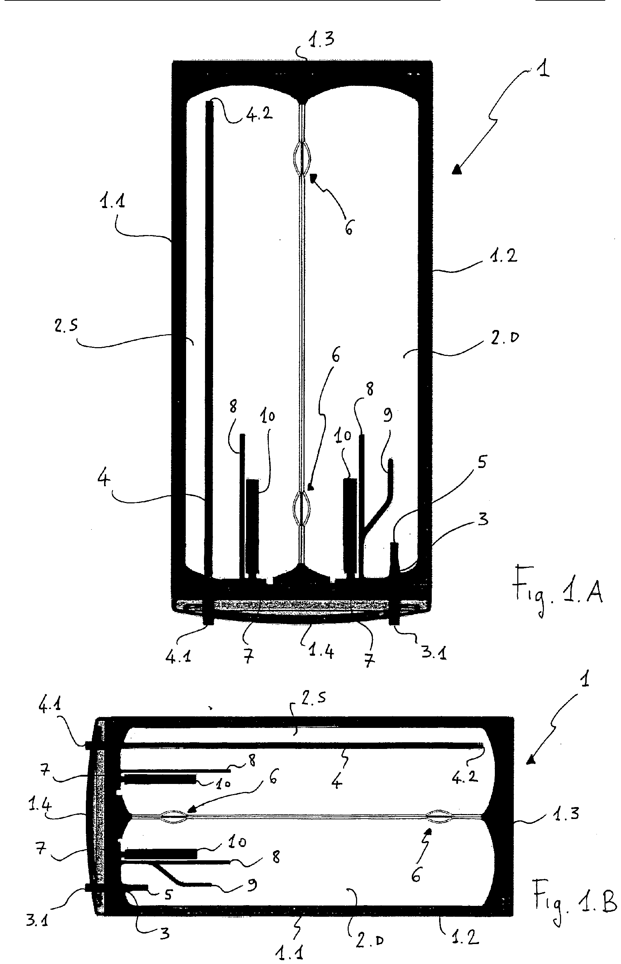

- Fig. 1.A shows a sectional view of the Flat water heater according to the invention, in accordance with a vertical installation mode;
- Fig. 1.B shows a sectional view of the Flat water heater of Fig. 1.A, according to a horizontal installation mode;
- Figs. 2.A and 2.B show, respectively in section and axonometry, two tanks of the Flat water heater according to the invention in a step prior to their connection in parallel;
- Figs. 3.A and 3.B show, respectively in section and axonometry, the two tanks of Figs. 2.A and 2.B connected in parallel according to the invention;
- Fig. 4 is a top view of the two tanks of Figs. 3.A and 3.B connected in parallel according to the invention;
- Fig. 5 is a sectional detail of the parallel-connection means of the tanks of the Flat water heater according to the invention;
- Fig. 6 shows a perspective view of what shown in Fig. 5.

The features of a preferred variant of the Flat water heater are now described using the references in the figures. It is noted that the above figures, although schematic, reproduce the elements of the invention according to proportions among their spatial dimensions and orientations which are compatible with a possible embodiment.

It is also noted that any dimensional and spatial term (such as "lower", "upper", "inner", "outer", "front", "rear" and the like) refers to the positions of the elements as shown in the annexed figures, without any limiting intent relative to the possible operating conditions: however, for the sake of clarity of description, hereinafter, such dimensional and spatial terms will refer to the variant of the Flat water heater intended for a vertical installation, i.e. the storage tanks thereof have the major axis arranged according to a vertical orientation.

With reference to Fig. 1.A, 1 indicates the Flat water heater (hereinafter summarized as "water heater 1") in its entirety, comprising an outer casing 1.1 wherein, surrounded by thermally insulating material 1.2 (for example polyurethane foam), two storage tanks 2.D and 2.S, are seated, connected in parallel to each other by direct reciprocal coupling means 6 that shall be described in detail hereinafter.

In the variant shown in the attached figures, such storage tanks 2.D/2.S are two in number, but the teachings of the present invention are also applicable to water heaters 1 comprising a greater number of tanks, each connected in parallel to the adjacent one by means of similar direct reciprocal coupling means 6; however, again for the purpose of facilitating the understanding of the description, hereinafter exclusive reference will be made to a water heater 1 having two tanks 2.D/2.S, respectively identifiable as the upstream tank 2.D (that is, the one in which the aqueduct cold water flows) and the downstream tank 2.S (that is the one from which the hot water directed to the user is drawn).

As per known art, the casing 1.1 of said water heater 1 comprises an upper cover 1.3 and a lower cover 1.4, whereon there find access:
- the inlet 3.1 of the cold water inflow tube 3 (hereinafter abbreviated to "cold water tube 3"), engaging in the upstream tank 2.D for the introduction of cold water substantially at the bottom level of such tank 2.D;
- the outlet 4.1 of the hot water outflow tube 4 (hereinafter abbreviated to "hot water tube 4"), engaging in the downstream tank 2.S and having a lengthwise development such as to substantially reach the dome of such tank 2.S wherefrom the hot water is drawn.

Similar to Flat water heaters with tanks connected in series and likewise to the Flat water heaters of the prior art having tanks connected in parallel by suitable by-pass ducts, said inlet 3.1 of the cold water tube 3 and outlet 4.1 of the hot water tube 4 are located in substantial proximity to the side edges of said lower cover 1.4, so that such cold water 3 and hot water 4 tubes engage in proximity to the outer shells of the respective storage tanks 2.D/2.S.

Such configuration is known to be the preferred one to allow the best energy efficiency of the water heater 1, both when installed vertically (see Fig. 1.A) and when installed horizontally (see Fig. 1.B), avoiding the risks of mixing of the incoming water from the cold water tube 3 and allowing the maximum volume of hot water to be drawn from the upper end 4.2 of the hot water tube 4.

As an alternative to the configuration shown in the Figure, it is however possible to provide that said cold 3 and hot 4 water tubes have their respective inlet 3.1 and outlet 4.1 in a more internal position with respect to the side edges of the cover 1.4, as well as it is possible to provide that only said outlet 4.1 of the hot water tube 4 is located in the innermost position and not in the vicinity of the side edge of such cover 1.4, said hot water tube 4 therefore engaging in the downstream tank 2.S not in proximity to its outer shell: in such case, such hot water tube 4 may advantageously have a lengthwise development according to an inclined direction towards said external shells of the tank 2.S, so that the upper end 4.2 of the tube 4 is in any case in proximity to such outer shell and at the upper zone ofthe dome from which it is possible to draw the greatest volume of hot water in both installation modes of the water heater 1.

As per prior art, preferably the upper end of said cold water tube 3 is provided with a baffle 5 adapted to direct the flow of the inlet water in a substantially orthogonal position, i.e. parallel to the bottom of the tank 2.D within which said cold water tube 3 is inserted, so as to minimize as much as possible the negative effects of the mixing.

Such baffle 5 may be made according to any known type of baffle, for example as those described in the prior documents EP2909543 and RU179197 owned by the same applicant of the present patent application.

Reference 7 indicates the flange adapted to close the opening made on the bottom of at least one tank 2.D/2.S, accessible by removal of the lower cover 1.4 of the water heater 1 for assembly and maintenance activities of the functional components fixed on said flange 7.

According to the preferred variant of the invention, the upstream tank 2.D is provided with a flange 7 adapted to house:
- at least one electrical resistance 9,
- a sheath 8 of a thermo-regulation and/or thermo-protection thermostat,
- at least one anti-corrosion anode 10, of the sacrificial type, typically made of magnesium or alloys thereof.

Said at least one electric resistance 9 (of any power, for example with single or double power, also modulable) may equally consist of an electric immersion resistance or an electric resistance of the so-called "dry" type, i.e. capable of indirectly heating the storage water without coming into direct contact with it: the latter type of electrical resistance 9 (without distinction, of the cartridge- or spark plug-, filament-type, in ceramic, steatite or other type) is contained in a sheath constrained in a watertight manner on the flange 7.

Still according to the preferred variant of the invention, the downstream tank 2.S is provided with a flange 7 adapted to house:
- a sheath 8 of the said thermo-regulation and/or thermo-protection thermostat,
- at least one anti-corrosion anode 10, of the sacrificial type, typically made of magnesium or alloys thereof.

According to a variant of the invention (not shown in the annexed figures), said flanges 7 may also be without the aforementioned thermostat sheaths 8, for example in versions of the water heater 1 having temperature sensors for the thermostat directly applied to the tanks 2.D/2.S or under such flanges 7.

A variant may also be provided in which said sheath 8 of the thermostat is in one of the tanks 2.D/2.S and said at least one electrical resistance 9 is in another tank of said tanks 2.D/2.S.

According to a further variant of the invention (not shown in the figure), said anti-corrosion anode 10 of the sacrificial type is present only in the downstream tank 2.S, while the protection of the upstream tank 2.D against any risk of galvanic and electrolytic attack is provided by at least one impressed current anode, supported by the flange 7 or in any case introduced into such upstream tank 2.D.

According to a further variant of the invention, both tanks 2.D/2.S are provided with at least one impressed current anode, in place of at least one anti-corrosion anode 10 of the sacrificial type.

Said tanks 2.D/2.S, the flanges 7, any sheaths 8 of the thermostat and any one or more sheaths for the dry resistances 9 are made of anti-corrosion material and/or subjected to suitable anti-corrosion treatment.

According to a variant of the invention, the tanks 2.D/2.S and the functional elements mentioned above are made of stainless steel.

What has been described so far are substantially common characteristics in the Flat water heaters with tanks connected in series or in the Flat water heaters with tanks connected in parallel by special by-pass ducts welded to mutual openings made on the adjacent shells of such tanks.

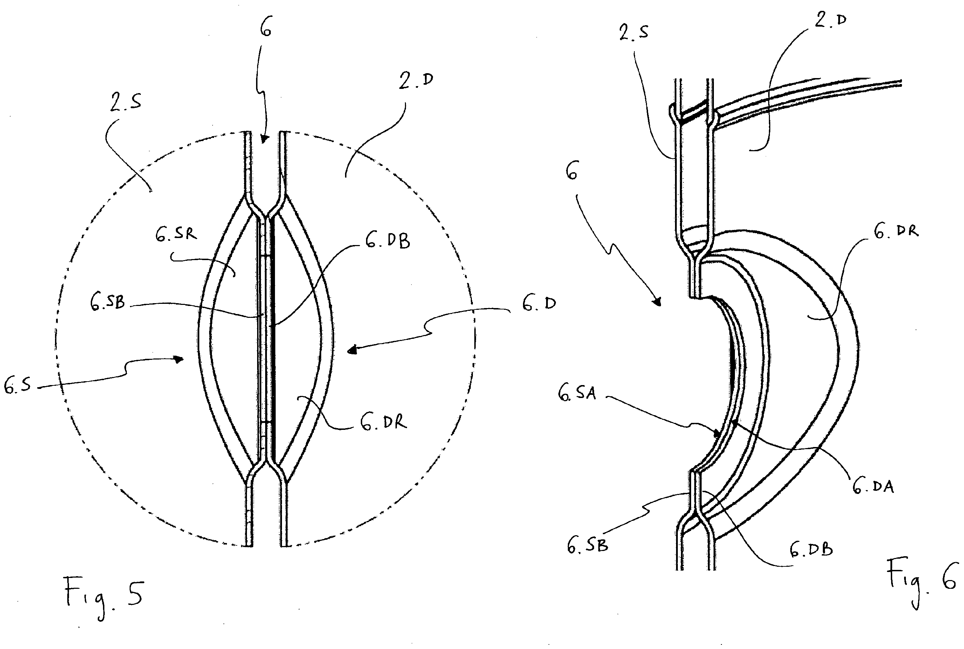

The innovative feature of the present invention lies in the absence of such by-pass ducts, since the parallel connection between the tanks 2.D/2.S instead takes place by means of direct reciprocal coupling means 6, as illustrated in the annexed figures (in particular in the detail figures 5 and 6) and as described hereinafter.

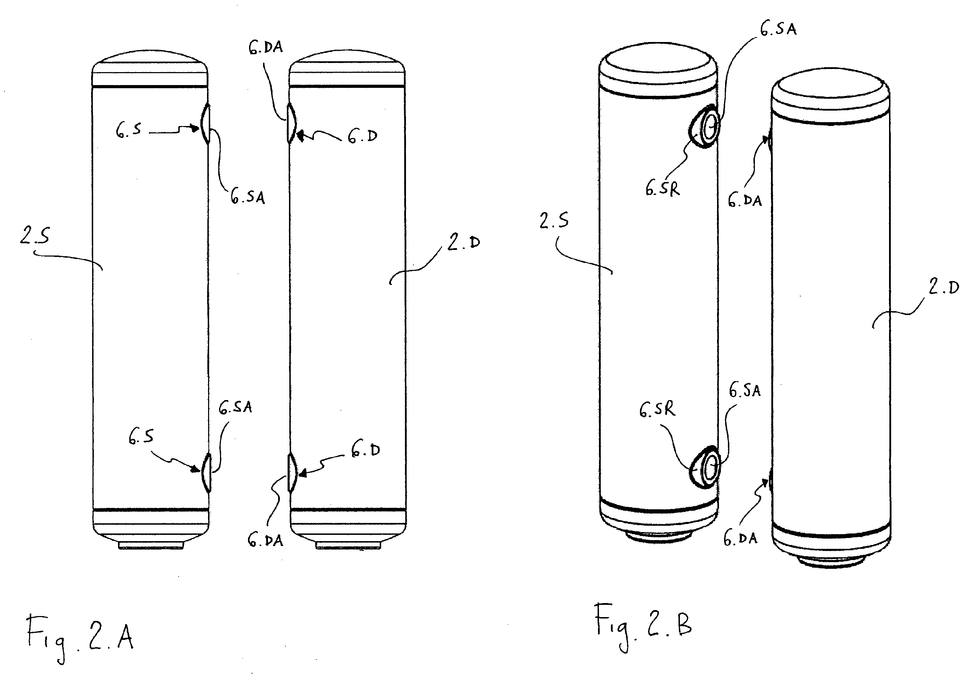

Taking as a reference also Figs. 2.A, 2.B, 3.A and 3.B, 6 indicates such direct reciprocal coupling means, comprising at least two opposed pairs of plane bosses 6.D/6.S with circular section, made by moulding on the adjacent shells of the two tanks 2.D/2.S.

Said plane bosses 6.D/6.S are made in the same positions on both tanks 2.D/2.S, i.e. at the same distance on the longitudinal axis of the shells, so as to be axially aligned for their subsequent coupling.

According to the preferred variant of the invention, such opposed pairs of plane bosses 6.D/6.S are two in number, made on the shells, one substantially in the proximity of the bottom of the tanks 2.D/2.S and the other in the proximity of the dome of the same, so as to create, once coupled, two communication passages between such adjacent tanks 2.D/2.S for their connection in parallel.

It is also possible to provide for a greater number of opposed pairs of said plane bosses 6.D/6.S, for example a third pair located in the substantially median zone of the longitudinal axis of the shells of such tanks 2.D/2.S.

As can be seen in Fig. 2.B and in the detail of Figs. 5 and 6, each of such plane bosses 6.D/6.S comprises a circular opening 6.DA/6.SA, circumscribed by an annular collar 6.DB/6.SB slightly protruding from the curvilinear surface of the shell by jointing portions 6.DR/6.SR with such shell.

Said annular collar 6.DB/6.SB acts as a plane zone for direct coupling with the reciprocal annular collar 6.SB/6.DB of the opposed plane boss 6.S/6.D of the adjacent tank.

The joining between said reciprocal annular collars 6.DB/6.SB takes place preferably by induction brazing, a welding method that may also be implemented in cases of this kind where there is a very short distance between the two tanks 2.D/2.S.

However, further coupling methods may be used, similar to said induction brazing, capable of providing similar results and advantages.

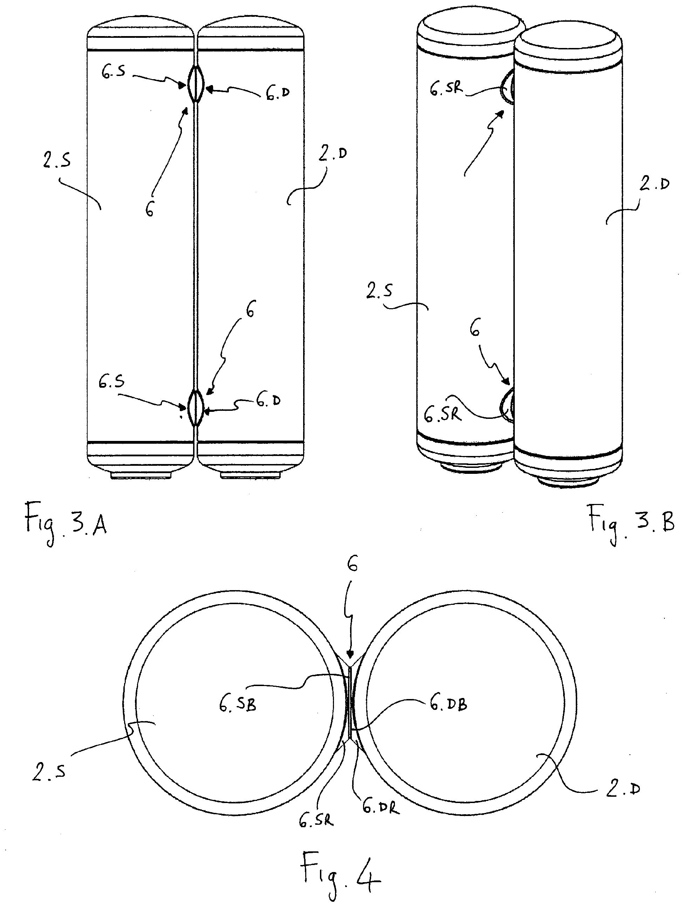

See Figs. 3.A, 3.B and 4, wherein such tanks 2.D/2.S are shown, following the coupling of said plane bosses 6.D/6.S: the parallel connection just described allows the tanks to be kept in very close proximity, with a gap in the order of about 4-8 mm, much less than the distance necessary for Flat water heaters with tanks connected in parallel via by-pass ducts.

Such substantial adjacency between the two tanks 2.D/2.S makes it possible to avoid the increase in width overall dimensions that would instead occur through the use of the by-pass ducts, keeping the final size of the water heater within an order of magnitude similar to those of a Flat water heater with tanks connected in series (such as those of the product described in patent EP2529159, where the gap between the two tanks is only about 8 mm).

To the aforementioned advantage (which also ensures the possibility of carry out the retrofit installation of the water heater 1 of the present invention in place of the aforementioned Flat water heater with tanks connected in series), there is associated that of being able to advantageously use the electrostatic powder enamelling process to protect the direct reciprocal coupling means 6 from corrosion, similarly to what happens for the remaining portions of the tanks 2.D/2.S, without having to resort to "wet enamelling" as it would happen in the presence of the by-pass ducts commonly used in the Flat water heaters types with tanks connected in parallel.

The parallel connection between contiguous tanks, implemented by means of the aforementioned direct reciprocal coupling means 6, avoids having to resort to the classic by-pass ducts, resulting in cost savings for raw materials and processing: it suffice to think of the fact that both ends of each by-pass duct must be welded to the two openings obtained on such tanks, while for the connection of a pair of plane bosses 6.D/6.S a single induction brazing operation is sufficient on the plane zone represented by the coupling of their reciprocal annular collars 6.DB/6.SB.

The present invention maintains the other advantages commonly available in Flat water heaters with tanks connected in parallel via by-pass ducts, i.e. the possibility of providing for the presence of at least one electrical resistance 9 in only one of the tanks 2.D/2.S (typically in the upstream tank 2.D, although an energetically more performing variant may be envisaged, in which also the downstream tank 2.S contains at least one electrical resistance 9) and the opportunity to be able to be installed equally either in vertical mode or in horizontal mode, ensuring in both cases the maximum quantity of hot water that can be drawn from the upper end 4.2 of the hot water tube 4 present in the downstream tank 2.S.

It is clear that several variants of the water heater 1 described above are possible to the man skilled in the art, without departing from the novelty scopes of the inventive idea, as well as it is clear that in the practical embodiment of the invention the various components described above may be replaced with technically equivalent ones.

For example, the annexed figures show a water heater 1 comprising two tanks 2.D/2.S of cylindrical shape: but, as anticipated above, water heaters 1 with a greater number of tanks, not necessarily of cylindrical shape, but also of ellipsoidal shape with reduced depth may obviously be provided, each of which is connected in parallel to the adjacent ones by means of direct reciprocal coupling means 6 described above.

Likewise, the pairs of plane bosses 6.D/6.S may also have a different shape from that described above for the preferred variant of the invention, each of them being able, for example, to comprise an opening 6.DA/6.SA having a shape not necessarily circular, delimited by a collar 6.DB/6.SB of similar shape, performing the function of a plane zone for the direct coupling (through induction braze welding or equally effective methodology) with a reciprocal collar 6.SB/6.DB of the opposite plane boss 6.S/6.D of the adjacent tank.

## Claims

1. Flat-type electrical storage water heater (1), comprising:
- at least two tanks (2.D, 2.S) connected in parallel to each other, one of them being an upstream tank (2.D) and one of them being a downstream tank (2.S),
- one outer casing (1.1) housing said at least two tanks (2.D, 2.S), having an upper cover (1.3) and a lower cover (1.4),
- one cold water tube (3) in the upstream tank (2.D) of said at least two tanks (2.D, 2.S), adapted for the introduction of cold water at the bottom level of said upstream tank (2.D) and having the inlet (3.1) on said lower cover (1.4),
- one hot water tube (4) in the downstream tank (2.S) of said at least two tanks (2.D, 2.S), adapted to draw the hot water from the dome of said downstream tank (2.S) and having the outlet (4.1) on said lower cover (1.4),
- at least one electrical resistance (9) and at least one anti-corrosion anode (10),
**characterised in that**
said at least two tanks (2.D, 2.S) are connected in parallel to each other by direct reciprocal coupling means (6) comprising at least two opposed pairs of plane bosses (6.D, 6.S) made by moulding on adjacent shells of said at least two tanks (2.D, 2.S), at the same distance on the longitudinal axis of said shells so as to be axially aligned,
each of said plane bosses (6.D; 6.S) comprising an opening (6.DA; 6.SA) circumscribed by a collar (6.DB; 6.SB), slightly projecting from the surface of such shell and jointed thereto by jointing portions (6.DR; 6.SR),
said collar (6.DB; 6.SB) being adapted to couple directly with the collar (6.SB; 6.DB) of the opposite plane boss (6.S; 6.D) of the adjacent tank (2.S, 2.D).

2. Water heater (1) according to the previous claim,
**characterised in that**
said at least two opposite pairs of plane bosses (6.D, 6.S) are in a number of two, a pair made on the shells in the proximity of the bottom of said at least two tanks (2.D, 2.S) and a pair made in the proximity of the dome of said at least two tanks (2.D, 2.S).

3. Water heater (1) according to any previous claim,
**characterised in that**
said collars (6.DB, 6.SB) of each opposed pair of plane bosses (6.D; 6.S) are coupled by induction braze welding.

4. Water heater (1) according to any previous claim,
**characterised in that**
each of said plane bosses (6.D; 6.S) has a circular section, said opening (6.DA; 6.SA) being a circular opening circumscribed by an annular collar (6.DB; 6.SB).

5. Water heater (1) according to any previous claim,
**characterised in that**
the upper end of said cold water tube (3) is provided with a baffle (5) adapted to direct the cold water flow to a direction parallel to the bottom of said upstream tank (2.D).

6. Water heater (1) according to any claim 1 to 5,
**characterised in that**
said inlet (3.1) of said cold water tube (3) and said outlet (4.1) of said hot water tube (4) are arranged in the proximity of the side edges of said lower cover (1.4).

7. Water heater (1) according to any claim 1 to 5,
**characterised in that**
said inlet (3.1) of said cold water tube (3) and said outlet (4.1) of said hot water tube (4) are arranged in an innermost position relative to the side edges of said lower cover (1.4).

8. Water heater (1) according to claim 7,
**characterised in that**
said hot water tube (4) has a lengthwise development according to a direction inclined towards the outer shell of said downstream tank (2.S), the upper end (4.2) thereof reaching the upper zone of the dome in the proximity of said outer shell of said downstream tank (2.S).

9. Water heater (1) according to claim 1,
**characterised in that**
said at least one electrical resistance (9) and said at least one anti-corrosion anode (10) are seated on a flange (7) with which said upstream tank (2.D) is provided.

10. Water heater (1) according to the previous claim, **characterised in that**
said flange (7) of said upstream tank (2.D) further seats a sheath (8) of a thermostat.

11. Water heater (1) according to claim 1,
**characterised in that**
said at least one electrical resistance (9) and said at least one anti-corrosion anode (10) are seated on a flange (7) with which said downstream tank (2.D) is provided.

12. Water heater (1) according to claim 1,
**characterised in that**
said flange (7) of said downstream tank (2.S) further seats a sheath (8) of a thermostat.

13. Water heater (1) according to claim 1,
**characterised in that**
said upstream tank (2.D) and downstream tank (2.S) each comprise a flange (7) whereon said at least one electrical resistance (9) and said at least one anti-corrosion anode (10) are seated.

14. Water heater (1) according to any claim 1 to 13,
**characterised in that**
said at least one anti-corrosion anode (10) is of the sacrificial type made of magnesium or magnesium alloy.

15. Water heater (1) according to any claim 1 to 13,
**characterised in that**
said at least one anti-corrosion anode (10) is of the impressed-current type.

16. Water heater (1) according to any claim 1 to 15,
**characterised in that**
said at least one anti-corrosion anode (10) in said upstream tank (2.D) is of the impressed-current type, whereas said at least one anti-corrosion anode (10) in said downstream tank (2.S) is of the sacrificial type made of magnesium or magnesium alloy.

## Patentansprüche

1. Elektrischer Flach-Warmwasserspeicher (1), umfassend:
- mindestens zwei parallel zueinander geschaltete Behälter (2.D, 2.S), von denen einer ein vorgelagerter Behälter (2.D) und einer ein nachgelagerter Behälter (2.S) ist,
- ein äußeres Gehäuse (1.1), das die mindestens zwei Behälter (2.D, 2.S) aufnimmt, das eine obere Abdeckung (1.3) und eine untere Abdeckung (1.4) aufweist,
- ein Kaltwasserrohr (3) in dem vorgelagerten Behälter (2.D) der mindestens zwei Behälter (2.D, 2.S), das für das Einleiten von kaltem Wasser auf der Ebene des Bodens des vorgelagerten Behälters (2. D) geeignet ist und das den Einlass (3.1) an der unteren Abdeckung (1.4) aufweist,
- ein Warmwasserrohr (4) in dem nachgelagerten Behälter (2.S) der mindestens zwei Behälter (2.D, 2.S), das geeignet ist, das warme Wasser aus der Kuppel des nachgelagerten Behälters (2.S) zu beziehen und das einen Auslass (4.1) an der unteren Abdeckung (1.4) aufweist,
- mindestens einen elektrischen Widerstand (9) und mindestens eine Korrosionsschutzanode (10),
**dadurch gekennzeichnet, dass**
die mindestens zwei Behälter (2.D, 2.S) durch Mittel zur direkten gegenseitigen Verbindung (6) parallel zueinander geschaltet sind, die mindestens zwei gegenüberliegende Paare von ebenen Vorsprüngen (6.D, 6.S), die durch Aufformen auf benachbarten Ummantelungen der mindestens zwei Behälter (2.D, 2.S) hergestellt sind, im gleichen Abstand auf der Längsachse der Ummantelungen derart aufweisen, um axial ausgerichtet zu sein,
wobei jeder der ebenen Vorsprünge (6.D, 6.S) eine Öffnung (6.DA; 6.SA) aufweist, die von einem Kragen (6.DB; 6.SB) umschrieben ist, der leicht von der Oberfläche einer solchen Ummantelung vorsteht und damit durch Verbindungsabschnitte (6.DR; 6.SR) verbunden ist, wobei der Kragen (6.DB; 6.SB) geeignet ist, direkt mit dem Kragen (6.SB; 6.DB) des gegenüberliegenden ebenen Vorsprungs (6.S; 6.D) des benachbarten Behälters (2.S, 2.D) verbunden zu werden.

2. Warmwasserbereiter (1) nach dem vorhergehenden Anspruch,
**dadurch gekennzeichnet, dass**
die mindestens zwei gegenüberliegenden Paare von ebenen Vorsprüngen (6.D, 6.S) in einer Anzahl von zwei vorhanden sind, wobei ein Paar an den Ummantelungen in der Nähe des Bodens der mindestens zwei Behälter (2.D, 2.S) erstellt ist und ein Paar in der Nähe der Kuppel der mindestens zwei Behälter (2.D, 2.S) erstellt ist.

3. Warmwasserbereiter (1) nach einem der vorhergehenden Ansprüche, **dadurch gekennzeichnet, dass**
die Kragen (6.DB, 6.SB) jedes gegenüberliegenden Paares von ebenen Vorsprüngen (6.D; 6.S) durch induktives Hartlöten verbunden sind.

4. Warmwasserbereiter (1) nach einem der vorhergehenden Ansprüche, **dadurch gekennzeichnet, dass**
jeder der ebenen Vorsprünge (6.D; 6.S) einen kreisförmigen Querschnitt aufweist, wobei die Öffnung (6.DA; 6.SA) eine kreisförmige Öffnung ist, die von einem ringförmigen Kragen (6.DB; 6.SB) umschrieben ist.

5. Warmwasserbereiter (1) nach einem der vorhergehenden Ansprüche, **dadurch gekennzeichnet, dass**
das obere Ende des Kaltwasserrohrs (3) mit einem Leitblech (5) versehen ist, das geeignet ist, den Kaltwasserfluss in eine Richtung zu lenken, die parallel zum Boden des vorgelagerten Behälters (2.D) ist.

6. Warmwasserbereiter (1) nach einem der Ansprüche 1 bis 5,
**dadurch gekennzeichnet, dass**
der Einlass (3.1) des Kaltwasserrohrs (3) und der Auslass (4.1) des Warmwasserrohrs (4) in der Nähe der Seitenkanten der unteren Abdeckung (1.4) angeordnet sind.

7. Warmwasserbereiter (1) nach einem der Ansprüche 1 bis 5,
**dadurch gekennzeichnet, dass**
der Auslass (3.1) des Kaltwasserrohrs (3) und der Einlass (4.1) des Warmwasserrohrs (4) in einer am weitesten innen liegenden Position relativ zu den Seitenkanten der unteren Abdeckung (1.4) angeordnet sind.

8. Warmwasserbereiter (1) nach Anspruch 7,
**dadurch gekennzeichnet, dass**
das Warmwasserrohr (4) eine Längserstreckung in einer Richtung aufweist, die zur äußeren Ummantelung des nachgelagerten Behälters (2.S) geneigt ist, wobei das obere Ende (4.2) davon den oberen Bereich der Kuppel in der Nähe der äußeren Ummantelung des nachgelagerten Behälters (2.S) erreicht.

9. Warmwasserbereiter (1) nach Anspruch 1,
**dadurch gekennzeichnet, dass**
der mindestens eine elektrische Widerstand (9) und die mindestens eine Korrosionsschutzanode (10) auf einem Flansch (7) untergebracht sind, mit dem der vorgelagerte Behälter (2.D) versehen ist.

10. Warmwasserbereiter (1) nach dem vorhergehenden Anspruch, **dadurch gekennzeichnet, dass**
der Flansch (7) des vorgelagerten Behälters (2.D) ferner eine Hülse (8) eines Thermostats aufnimmt.

11. Warmwasserbereiter (1) nach Anspruch 1,
**dadurch gekennzeichnet, dass**
der mindestens eine elektrische Widerstand (9) und die mindestens eine Korrosionsschutzanode (10) auf einem Flansch (7) untergebracht sind, mit dem der nachgelagerte Behälter (2.D) versehen ist.

12. Warmwasserbereiter (1) nach Anspruch 1,
**dadurch gekennzeichnet, dass**
der Flansch (7) des nachgelagerten Behälters (2.S) ferner eine Hülse (8) eines Thermostats aufnimmt.

13. Warmwasserbereiter (1) nach Anspruch 1,
**dadurch gekennzeichnet, dass**
der vorgelagerte Behälter (2.D) und der nachgelagerte Behälter (2.S) jeweils einen Flansch (7) aufweisen, auf dem der mindestens eine elektrische Widerstand (9) und die mindestens eine Korrosionsschutzanode (10) untergebracht sind.

14. Warmwasserbereiter (1) nach einem der Ansprüche 1 bis 13,
**dadurch gekennzeichnet, dass**
die mindestens eine Korrosionsschutzanode (10) vom Typ der Opferanode ist, die aus Magnesium oder einer Magnesiumlegierung hergestellt ist.

15. Warmwasserbereiter (1) nach einem der Ansprüche 1 bis 13,
**dadurch gekennzeichnet, dass**
die mindestens eine Korrosionsschutzanode (10) vom Typ der Druckstromanode ist.

16. Warmwasserbereiter (1) nach einem der Ansprüche 1 bis 15,
**dadurch gekennzeichnet, dass**
die mindestens eine Korrosionsschutzanode (10) in dem vorgelagerten Behälter (2.D) vom Typ der Druckstromanode ist, während die mindestens eine Korrosionsschutzanode (10) in dem nachgelagerten Behälter (2.S) vom Typ der Opferanode ist, die aus Magnesium oder einer Magnesiumlegierung hergestellt ist.

## Revendications

1. Chauffe-eau électrique à accumulation de type plat (1) comprenant :
- au moins deux réservoirs (2.D, 2.S) reliés en parallèle l'un à l'autre, dont l'un est un réservoir en amont (2.D) et l'autre un réservoir en aval (2.S),
- une enveloppe extérieure (1.1) abritant au moins deux réservoirs (2.D, 2.S), comportant un couvercle supérieur (1.3) et un couvercle inférieur (1.4),
- un tube d'eau froide (3) dans le réservoir en amont (2.D) desdits au moins deux réservoirs (2.D, 2.S), capable d'introduire de l'eau froide au niveau du fond dudit réservoir en amont (2.D) et ayant son entrée (3.1) sur ledit couvercle inférieur (1.4),
- un tube d'eau chaude (4) dans le réservoir en aval (2.S) desdits au moins deux réservoirs (2.D, 2.S), tirant l'eau chaude du dôme dudit réservoir en aval (2.S) et ayant la sortie (4.1) sur ledit couvercle inférieur (1.4),
- au moins une résistance électrique (9) et au moins une anode anti-corrosion (10),
**caractérisé par le fait que**
lesdits au moins deux réservoirs (2.D, 2.S) sont reliés en parallèle l'un à l'autre au moyen de moyens d'accouplement réciproque direct (6) comprenant au moins deux paires opposées de bossages plats (6.D, 6.S) réalisés par moulage sur les pièces latérales adjacentes desdits au moins deux réservoirs (2.D, 2.S), à la même distance le long de l'axe longitudinal desdits bossages de manière à être alignés axialement, chacune desdits bossages plats (6.D; 6.S) comprenant une ouverture (6.DA; 6.SA) circonscrite par un collier (6.DB; 6.SB) faisant légèrement saillie de la surface de ladite virole et relié à celle-ci au moyen de parties de liaison (6.DR; 6.SR),
ledit collier (6.DB; 6.SB) étant capable de s'accoupler directement avec le collier (6.SB; 6.DB) du bossage plat opposé (6.S; 6.D) du réservoir adjacent (2.S, 2.D).

2. Chauffe-eau (1) selon la revendication précédente,
**caractérisé par le fait que**
lesdites au moins deux paires opposées de bossages plats (6.D, 6.S) sont au nombre de deux, une paire réalisée sur la virole près du fond desdits au moins deux réservoirs (2.D, 2.S) et une paire réalisée près du dôme desdits au moins deux réservoirs (2.D, 2. S).

3. Chauffe-eau (1) selon l'une quelconque des revendications précédentes, **caractérisé par le fait que**
lesdits colliers (6.DB; 6.SB) de chaque paire opposée desdits bossages plats (6.D; 6.S) sont couplés par soudage par induction.

4. Chauffe-eau (1) selon l'une quelconque des revendications précédentes, **caractérisé par le fait que**
chacun desdits bossages plats (6.D; 6.S) a une section transversale circulaire, ladite ouverture (6.DA; 6.SA) étant une ouverture circulaire circonscrite par un collier annulaire (6.DB; 6.SB).

5. Chauffe-eau (1) selon l'une quelconque des revendications précédentes, **caractérisé par le fait que**
l'extrémité supérieure dudit tube d'eau froide (3) est équipée d'un déflecteur (5) pour diriger le flux d'eau froide dans une direction parallèle au fond dudit réservoir en amont (2.D).

6. Chauffe-eau (1) selon l'une quelconque des revendications 1 à 5, **caractérisé par le fait que**
ladite entrée (3.1) dudit tube d'eau froide (3) et ladite sortie (4.1) dudit tube d'eau chaude (4) sont situées près des bords latéraux dudit couvercle inférieur (1.4).

7. Chauffe-eau (1) selon l'une quelconque des revendications 1 à 5, **caractérisé par le fait que**
ladite entrée (3.1) dudit tube d'eau froide (3) et/ou ladite sortie (4.1) dudit tube d'eau chaude (4) sont situées dans une position plus interne par rapport aux bords latéraux dudit couvercle inférieur (1.4).

8. Chauffe-eau (1) selon la revendication 7,
**caractérisé par le fait que**
ledit tube d'eau chaude (4) s'est développé longitudinalement dans une direction inclinée vers la virole extérieure dudit réservoir en aval (2.S), son extrémité supérieure (4.2) atteignant la zone supérieure du dôme à proximité de ladite virole extérieure dudit réservoir en aval (2.S).

9. Chauffe-eau (1) selon la revendication 1,
**caractérisé par le fait que**
ladite au moins une résistance électrique (9) et ladite au moins une anode anti-corrosion (10) sont logées sur une bride (7) dont est équipé ledit réservoir en amont (2.D).

10. Chauffe-eau (1) selon la revendication précédente,
**caractérisé par le fait que**
ladite bride (7) dudit réservoir en amont (2.D) reçoit en outre une gaine (8) d'un thermostat.

11. Chauffe-eau (1) selon la revendication 1,
**caractérisé par le fait que**
ladite au moins une résistance électrique (9) et ladite au moins une anode anti-corrosion (10) sont logées sur une bride (7) dont est équipé ledit réservoir en aval (2.D).

12. Chauffe-eau (1) selon la revendication 1,
**caractérisé par le fait que**
ladite bride (7) dudit réservoir en aval (2.S) reçoit en outre une gaine (8) d'un thermostat.

13. Chauffe-eau (1) selon la revendication 1,
**caractérisé par le fait que**
lesdits réservoir en amont (2.D) et réservoir en aval (2.S) comprennent chacun une bride (7) sur laquelle sont logées ladite au moins une résistance électrique (9) et ladite au moins une anode anti-corrosion (10).

14. Chauffe-eau (1) selon l'une quelconque des revendications 1 à 13, **caractérisé par le fait que**
ladite au moins une anode anti-corrosion (10) est du type sacrificiel en magnésium ou en alliage de magnésium.

15. Chauffe-eau (1) selon l'une quelconque des revendications 1 à 13, **caractérisé par le fait que**
ladite au moins une anode anti-corrosion (10) est du type à courant imposé.

16. Chauffe-eau (1) selon l'une quelconque des revendications 1 à 15, **caractérisé par le fait que**
ladite au moins une anode anti-corrosion (10) dans ledit réservoir en amont (2.D) est du type à courant imposé, tandis que ladite au moins une anode anti-corrosion (10) dans ledit réservoir en aval (2.S) est du type sacrificiel en magnésium ou alliage de magnésium.
